# EUROPÄISCHE PATENTANMELDUNG

(11) **EP 4 083 408 A1**
(43) Veröffentlichungstag der Anmeldung: **02.11.2022**
(21) Anmeldenummer: 22168942.5
(22) Anmeldetag: 20.04.2022
(51) Int. Cl.: F02D 41/06, F02D 41/12, B60W 20/16, F02N 11/08

(54) **ABGASNACHBEHANDLUNG EINER BRENNKRAFTMASCHINE MIT EINEM ABGASKATALYSATOR MIT SAUERSTOFFSPEICHER**

(30) Priorität: 27.04.2021 DE 102021110738
(71) Anmelder: VOLKSWAGEN AG, 38440 Wolfsburg (DE)
(72) Erfinder: Schemann, Stephan, 38440 Wolfsburg (DE); Golkowski, Marc-Andre, 30175 Hannover (DE)
(74) Vertreter: Bungartz, Florian

(57) **Zusammenfassung**

Eine Brennkraftmaschine, die insbesondere für den Antrieb eines Kraftfahrzeugs vorgesehen sein kann und die einen Verbrennungsmotor 1 und einen Abgasstrang 8 mit einer Abgasnachbehandlungseinrichtung 11 aufweist, wobei die Abgasnachbehandlungseinrichtung 11 einen Abgaskatalysator 12 mit einem Sauerstoffspeicher umfasst, wird derart betrieben, dass mit dem Beginn eines befeuerten Betriebs des Verbrennungsmotors 1, der sich an einen nicht befeuerten Schubbetrieb oder an einen Nichtbetrieb anschließt, temporär die Größe eines von dem Verbrennungsmotor 1 erzeugten Abgasmassenstroms in Abhängigkeit von dem Füllstand des Sauerstoffspeichers gesteuert wird.

## Beschreibung

Die Erfindung ein Verfahren zum Betreiben einer Brennkraftmaschine, die einen Verbrennungsmotor und einen Abgasstrang mit einer Abgasnachbehandlungseinrichtung aufweist, wobei die Abgasnachbehandlungseinrichtung einen Abgaskatalysator mit Sauerstoffspeicher umfasst.

Ein Abgaskatalysator, wie insbesondere ein Dreiwegekatalysator kann einen Sauerstoffspeicher, d.h. eine definierte Kapazität zur Speicherung von Sauerstoff, aufweisen. In einem mageren Betrieb eines Verbrennungsmotors einer Brennkraftmaschine, die einen solchen Dreiwegekatalysator in einem Abgasstrang umfasst, wird überschüssiger, in dem Rohabgas enthaltener Sauerstoff in dem Sauerstoffspeicher eingelagert, während in einem fetten Betrieb der eingelagerte Sauerstoff für die genannten Umwandlungen genutzt wird. Ein solches, regelmäßig wechselndes Einlagern und Auslagern von Sauerstoff erfolgt dabei auch bei einem Verbrennungsmotor, der, wie dies bei einem fremdgezündeten und quantitätsgeregelten Ottomotor üblich ist, mit einem grundsätzlich stöchiometrischen Verbrennungsluftverhältnis, d.h. mit λ ≈ 1, betrieben wird. Zur Realisierung eines solchen stöchiometrischen Verbrennungsluftverhältnisses wird nämlich üblicherweise mittels mindestens einer sogenannten Lambdasonde der Restsauerstoffgehalt im Abgas analysiert und zur Regelung des Luft-Brennstoff-Massenverhältnisses für anschließende Verbrennungsprozesse genutzt. Eine solche reaktive Regelung führt aber dazu, dass das tatsächliche Verbrennungsluftverhältnis in einem üblicherweise relativ schmalen Bereich um das stöchiometrische Verbrennungsluftverhältnis schwankt. Bekannt ist diesbezüglich, aktiv eine sogenannte Eigenfrequenzregelung für das Verbrennungsluftverhältnis umzusetzen, bei der der Verbrennungsmotor definiert wechselweise leicht fett, d.h. mit einem geringfügig unterstöchiometrischen Verbrennungsluftverhältnis (λ < 1), sowie leicht mager, d.h. mit einem geringfügig überstöchiometrischen Verbrennungsluftverhältnis (λ > 1), betrieben wird. Eine Umschaltung zwischen fettem und magerem Betrieb erfolgt dann bei definierten Abweichungen von dem stöchiometrischen Verbrennungsluftverhältnis.

Ein Problem bei einem solchen Betrieb einer Brennkraftmaschine kann sich dann ergeben, wenn der Verbrennungsmotor eine Zeit lang unbefeuert betrieben wurde. Dies kann der Fall sein, wenn dieser mitgeschleppt wurde (Schubbetrieb) oder wenn dieser, beispielsweise im Rahmen einer automatisierten Stoppfunktion, außer Betrieb gesetzt wird, wobei der Verbrennungsmotor mit der Beendigung der Kraftstoffeinspritzung nicht unmittelbar steht, sondern noch einige wenige Drehungen der Abtriebswelle (Kurbelwelle) durchführt. In einem solchen unbefeuerten Betrieb fördert der Verbrennungsmotor Abgas in den Abgasstrang, das im Wesentlichen aus Luft besteht und damit erhebliche Mengen an Sauerstoff umfasst. Dieser Sauerstoff wird in den Sauerstoffspeicher eingelagert und führt damit zu einer Erhöhung des Füllstands des Sauerstoffspeichers, häufig bis zur vollständigen Ausschöpfung der Sauerstoffspeicherkapazität. Wird der Verbrennungsmotor anschließend wieder befeuert betrieben, steht für einen relativ kurzen aber nicht unerheblichen Zeitraum keine (ausreichende) Sauerstoffspeicherkapazität zur Verfügung, was zu erhöhten Stickoxidemissionen führen kann. Um dies zu vermeiden werden solche Verbrennungsmotoren häufig nach der Aufnahme eines befeuerten Betriebs kurzzeitig grundsätzlich fett betriebenen, was jedoch mit dem Problem eines erhöhten Kraftstoffverbrauchs und damit erhöhter CO₂-Emissionen verbunden ist. Zudem kann es dabei aufgrund einer gleichzeitigen Anwesenheit von unverbrannten Kohlenwasserstoffen und Stickoxiden und zu einer ungewollten Ausbildung relevanter Mengen von Ammoniak (NH3) kommen.

Die DE 102 23 733 A1 offenbart, einem Verbrennungsmotor nach einem Nichtbetrieb und für eine vorgesehene Wiederaufnahme des Betriebs für eine kurze Zeit Kraftstoff zuzuführen, ohne dass dieser Kraftstoff gezündet wird. Dieser in den Abgasstrang überführte Kraftstoff soll zu einem Auslagern von Sauerstoff, der in dem Sauerstoffspeicher gespeichert ist, führen, womit sichergestellt werden soll, dass mit der Wiederaufnahme des befeuerten Betriebs des Verbrennungsmotors der Sauerstoffspeicher einen ausreichend niedrigen Füllstand aufweist. Das Problem eines erhöhten Kraftstoffverbrauchs und damit erhöhter CO₂-Emissionen wird dadurch jedoch nicht gelöst.

Die US 2006/0021330 A1 beschreibt ein Verfahren, bei dem nach der Wiederaufnahme eines Betriebs eines Verbrennungsmotors der Sauerstoffgehalt des Abgases an einer ersten Stelle stromauf eines Abgaskatalysators sowie an einer zweiten Stelle stromab des Abgaskatalysators gemessen und in Abhängigkeit von der Differenz der Messwerte eine Steuerung des Verbrennungsmotors beeinflusst wird.

Ein Verfahren zum Betreiben einer Brennkraftmaschine mit einem Fokus auf der Abgasnachbehandlung ist zudem in der US 2007/0163540 A1 offenbart.

Der Erfindung lag die Aufgabe zugrunde, die Problematik, die mit einem hohen Füllstand eines Sauerstoffspeichers mit dem Beginn eines Betriebs eines Verbrennungsmotors verbunden ist, möglichst zu vermeiden.

Diese Aufgabe kann durch ein Verfahren gemäß dem Patentanspruch 1 gelöst werden. Vorteilhafte Ausführungsformen dieses Verfahrens sind Gegenstände der weiteren Patentansprüche und ergeben sich aus der nachfolgenden Beschreibung der Erfindung.

Erfindungsgemäß ist vorgesehen, eine Brennkraftmaschine, die insbesondere für den Antrieb eines Kraftfahrzeugs vorgesehen sein kann und die einen Verbrennungsmotor und einen Abgasstrang mit einer Abgasnachbehandlungseinrichtung aufweist, wobei die Abgasnachbehandlungseinrichtung einen Abgaskatalysator mit einem Sauerstoffspeicher umfasst, derart zu betreiben, dass mit dem Beginn eines befeuerten Betriebs des Verbrennungsmotors, der sich an einen nicht befeuerten Schubbetrieb oder an einen Nichtbetrieb anschließt, temporär die Größe eines von dem Verbrennungsmotor erzeugten Abgasmassenstroms in Abhängigkeit von dem Füllstand des Sauerstoffspeichers (veränderlich) gesteuert beziehungsweise beeinflusst wird.

Demnach wird der Betrieb des Verbrennungsmotors beziehungsweise die durch diesen erzeugte Antriebsleistung, die direkten Einfluss auf den Massenstrom des von dem Verbrennungsmotor erzeugten Abgases hat, nicht ausschließlich in Abhängigkeit von einer anliegenden Leistungsanforderung sondern zumindest auch unter Berücksichtigung des Füllstands des Sauerstoffspeichers durchgeführt. Dadurch kann vorgesehen sein, dass bei einem oberhalb eines Grenzwerts liegenden Füllstand des Sauerstoffspeichers die Betriebsfunktion des Verbrennungsmotors (z.B. konkret hinsichtlich eines Soll-Antriebsmoments und/oder einer Soll-Brennraumfüllung und/oder eines Soll-Massenstroms von Frischgas und/oder Abgas) derart limitiert wird, dass sich ein relativ kleiner Abgasmassenstrom (im Vergleich zu einem entsprechenden Betrieb ohne Limitierung) einstellt. Ein solcher relativ kleiner Abgasmassenstrom kann dazu beitragen, dass die Kapazität des Sauerstoffspeichers trotz eines relativ hohen Füllstands zu Beginn des befeuerten Betriebs nicht vollständig ausgeschöpft wird, bevor durch einen Normalbetrieb ein wieder geregelt ablaufendes Füllen und Entleeren des Sauerstoffspeichers durchgeführt wird. Als Normalbetrieb wird dabei verstanden, dass die Abgasnachbehandlung mittels des Abgaskatalysators nicht mehr durch Sauerstoff, der durch den nicht befeuerten Schubbetrieb oder den Nichtbetrieb des Verbrennungsmotors in den Abgasstrang eingebracht wurde, beeinflusst wird. Durch das erfindungsgemäße Verfahren kann ein Schlupf von Stickoxiden durch den Abgaskatalysator auch kurz oder unmittelbar mit dem Beginn des Betriebs des Verbrennungsmotors möglichst weitgehend verhindert werden.

Eine Limitierung der Betriebsfunktion des Verbrennungsmotors kann auch zu einer Limitierung der von dem Verbrennungsmotor erzeugten Antriebsleistung führen, so dass es grundsätzlich möglich ist, dass der Verbrennungsmotor aufgrund der Limitierung eine geringere Antriebsleistung bereitstellt, als dieser ohne die Limitierung bei einer entsprechenden Leistungsanforderung bereitstellen würde. Um eine solche Limitierung beziehungsweise die Auswirkungen davon möglichst gering zu halten, sollte die Limitierung nur dann umgesetzt werden, wenn diese auch wirklich erforderlich ist, was durch die Definition des Grenzwerts sichergestellt werden kann. Liegt der Füllstand des Stickoxidspeichers zu Beginn des befeuerten Betriebs unterhalb des Grenzwerts, kann eine entsprechende Limitierung dementsprechend entfallen und somit der Betrieb des Verbrennungsmotors beziehungsweise die durch diesen erzeugte Antriebsleistung gegebenenfalls ausschließlich in Abhängigkeit von der vorliegenden Leistungsanforderung, zumindest jedoch nicht in Abhängigkeit von dem Füllstand des Sauerstoffspeichers gesteuert werden.

Der Grenzwert muss dabei nicht fix definiert sein. Vielmehr kann es sinnvoll sein, diesen variabel in Abhängigkeit von Betriebsparametern der Brennkraftmaschine zu ändern, so dass bei dem Beginn eines ersten befeuerten Betriebs, der sich an einen ersten Schubbetrieb oder Nichtbetrieb anschließt, ein anderer Grenzwert als bei dem Beginn eines zweiten befeuerten Betriebs, der sich an einen zweiten Schubbetrieb oder Nichtbetrieb anschließt, vorgesehen sein kann. Dadurch kann beispielsweise berücksichtigt werden, dass das von dem Verbrennungsmotor erzeugte Rohabgas in Abhängigkeit von einer Vielzahl von Betriebsparametern der Brennkraftmaschine, beispielsweise der Betriebstemperatur des Verbrennungsmotors, der Höhe der Leistungsanforderung, der Rate einer gegebenenfalls vorgesehenen Abgasrückführung, etc., unterschiedliche Zusammensetzungen und damit auch unterschiedliche Mengen an Schadstoffen und insbesondere auch Stickoxiden aufweisen kann. Dementsprechend kann bei bestimmten Betriebsparametern der Brennkraftmaschine ein relativ hoher Grenzwert vorgesehen sein, weil unter Berücksichtigung dieser Betriebsparameter davon ausgegangen werden kann, dass die verbliebene relativ kleine Sauerstoffspeicherkapazität des Sauerstoffspeichers ausreichend ist, um einen Schlupf von Stickoxiden durch den Abgaskatalysator zu vermeiden. Bei bestimmten anderen Betriebsparametern kann dagegen ein relativ niedriger Grenzwert erforderlich sein, um einen solchen Schlupf von Stickoxiden mit ausreichender Sicherheit zu vermeiden.

Weiterhin sollte die Limitierung der Betriebsfunktion des Verbrennungsmotors, sofern eine solche erforderlich ist, auch nur so weitgehend umgesetzt werden, wie dies zur Realisierung des angestrebten Ziels, nämlich einen Schlupf von Stickoxiden durch den Abgaskatalysator möglichst zu vermeiden, erforderlich ist. Dementsprechend kann vorzugsweise vorgesehen sein, dass die Limitierung der Betriebsfunktion des Verbrennungsmotors umso größer gewählt wird, je höher der Füllstand des Sauerstoffspeichers ist. Bei einem Beginn des befeuerten Betriebs des Verbrennungsmotors mit beispielsweise vollständig gefülltem Sauerstoffspeicher (und demnach einer Sauerstoffspeicherkapazität, die im Wesentlichen null beträgt) kann folglich eine deutlich ausgeprägtere Limitierung der Betriebsfunktion des Verbrennungsmotors vorgesehen sein, als dies bei einem über dem Grenzwert gefüllten Sauerstoffspeicher vorgesehen ist, der noch eine nicht unerhebliche Sauerstoffspeicherkapazität aufweist.

Bei dem Abgaskatalysator kann es sich insbesondere um einen Dreiwegekatalysator handeln, der zumindest eine Umwandlung von Kohlenstoffmonoxid (CO), Stickoxiden (NOx) und unverbrannten Kohlenwasserstoffen (HC) zu Kohlenstoffdioxid (CO₂), Stickstoff (N₂) und Wasser (H₂O) katalytisch unterstützen kann. Ein solcher Dreiwegekatalysator kann auch noch weitere Abgasnachbehandlungsfunktionen aufweisen, insbesondere die Funktion eines Partikelfilters. Ein Dreiwegekatalysator mit Partikelfilterfunktion wird üblicherweise auch als Vierwegekatalysator bezeichnet. Ein solcher Vierwegekatalysator stellt erfindungsgemäß eine Ausbaustufe eines Dreiwegekatalysators dar und fällt demnach auch unter die erfindungsgemäße Definition eines Dreiwegekatalysators. Für die Ausbildung eines Vierwegekatalysators kann vorgesehen sein, dass ein als Partikelfilter wirksamer Filterkörper mit einer als Dreiwegekatalysator wirkenden Beschichtung versehen ist.

Weist die Abgasnachbehandlungseinrichtung der Brennkraftmaschine mehrere Abgaskatalysatoren mit Sauerstoffspeichern auf, kann der Abgaskatalysator, dessen Sauerstoffspeicherkapazität erfindungsgemäß als Parameter in der Steuerung der Größe des Abgasmassenstroms herangezogen wird, insbesondere der innerhalb des Abgasstrangs am nächsten an dem Verbrennungsmotor gelegene Abgaskatalysator, bei einer Ausgestaltung als Dreiwegekatalysator zumindest der am nächsten an dem Verbrennungsmotor gelegene Dreiwegekatalysator, sein.

Um zu vermeiden, dass sich eine Limitierung der Betriebsfunktion des Verbrennungsmotors negativ auf die Leistungsfähigkeit beziehungsweise das Betriebsverhalten der gesamten Brennkraftmaschine auswirkt, kann vorzugsweise vorgesehen sein, dass die Limitierung der Betriebsfunktion des Verbrennungsmotors durch einen mit dem Verbrennungsmotor antriebsverbundenen Elektromotor der Brennkraftmaschine zumindest teilweise kompensiert wird. Wird somit beispielsweise eine Leistungsabgabe des Verbrennungsmotors aufgrund des Füllstands des Sauerstoffspeicher limitiert beziehungsweise auf einen Wert beschränkt, der unterhalb eines Sollwerts in Abhängigkeit von einer Leistungsanforderung an die Brennkraftmaschine liegt, kann vorgesehen sein, diese Differenz zwischen der Leistungsabgabe des Verbrennungsmotors und der Leistungsanforderung an die Brennkraftmaschine durch den Elektromotor zu kompensieren.

Bei dem Elektromotor kann es sich beispielsweise um einen elektrischen Traktionsmotor handeln, der bei einem die Brennkraftmaschine umfassenden Kraftfahrzeug (Hybridfahrzeug) auch dafür vorgesehen sein kann, bedarfsweise einen Fahrantrieb des Kraftfahrzeugs zu gewährleisten. Dabei kann der Traktionsmotor auch so ausgestaltet sein, dass dieser temporär den Fahrantrieb des Kraftfahrzeugs vollständig bewirkt.

Der Nichtbetrieb und der sich anschließende befeuerte Betrieb können insbesondere aus einer automatisierten Start-Stopp-Funktion des Verbrennungsmotors resultieren. Da eine solche Start-Stopp-Funktion des Verbrennungsmotors relativ häufig in einem Betrieb der Brennkraftmaschine erfolgen kann, kann es hinsichtlich des Schadstoffemissionsverhaltens der Brennkraftmaschine besonders vorteilhaft sein, bei einem darauffolgenden Beginn eines befeuerten Betriebs des Verbrennungsmotors die Größe des von dem Verbrennungsmotor erzeugten Abgasmassenstroms in Abhängigkeit von dem Füllstand des Sauerstoffspeichers zu steuern.

Die Problematik eines möglichen Schlupfs von Stickoxiden durch den Abgaskatalysator kann sich auch insbesondere dann stellen, wenn während des Schubbetriebs ein Wechsel der Übersetzungsstufe eines mit dem Verbrennungsmotor antriebsverbundenen (manuellen oder automatischen) Schaltgetriebes, insbesondere hin zu einer kleineren Übersetzungsstufe (mit einem kleineren Übersetzungsverhältnis), erfolgt ist, weil bei einem solchen Wechsel der Übersetzungsstufe kurzzeitig relativ hohe Lastanforderungen an den Verbrennungsmotor gestellt werden können, die mit entsprechend hohen Abgasmassenströmen einhergehen können.

Gemäß einer bevorzugten Ausführungsform eines erfindungsgemäßen Verfahrens kann vorgesehen sein, dass der Verbrennungsmotor mit dem Beginn des befeuerten Betriebs zunächst gezielt fett (auch im Mittel einer entsprechenden Regelung des Verbrennungsluftverhältnisses) und anschließend mit einem stöchiometrischen Verbrennungsluftverhältnis betrieben wird. Der Verbrennungsmotor kann demnach grundsätzlich für einen Betrieb mit einem stöchiometrischen Verbrennungsluftverhältnis ausgelegt sein, wobei der temporäre fette Betrieb mit Beginn des befeuerten Betriebs ergänzend zu einer Steuerung und insbesondere Limitierung der Größe des von dem Verbrennungsmotor erzeugten Abgasmassenstroms in Abhängigkeit von der Füllstand des Sauerstoffspeichers dazu dient, Sauerstoff aus dem Sauerstoffspeicher auszulagern. Dadurch kann ein Schlupf von Stickoxiden durch den Abgaskatalysator möglichst weitgehend und insbesondere auch mit einer möglichst geringen Limitierung des von dem Verbrennungsmotor erzeugten Abgasmassenstroms und einer daraus resultierenden Limitierung der Betriebsfunktion des Verbrennungsmotors bewirkt werden.

Bei dem Verbrennungsmotor einer erfindungsgemäß betriebenen Brennkraftmaschine kann es sich insbesondere um einen (fremdgezündeten und quantitätsgeregelten) Ottomotor handeln. Es besteht aber auch die Möglichkeit, dass es sich bei dem Verbrennungsmotor um einen (selbstzündenden und qualitätsgeregelten) Dieselmotor oder um eine Kombination aus Ottomotor und Dieselmotor, z.B. um einen Verbrennungsmotor mit homogener Kompressionszündung, handelt. Der Verbrennungsmotor kann dabei sowohl mit Flüssigkraftstoff (d.h. Diesel oder Benzin) als auch mit einem gasförmigen Kraftstoff (insbesondere Erdgas, LNG oder LPG) betrieben werden.

Die Erfindung betrifft auch ein Kraftfahrzeug, insbesondere ein radbasiertes und nicht schienengebundenes Kraftfahrzeug (vorzugsweise ein PKW oder ein LKW), mit einer erfindungsgemäß betriebenen Brennkraftmaschine. Dabei kann der Verbrennungsmotor der Brennkraftmaschine insbesondere zur (direkten oder indirekten) Bereitstellung der Fahrantriebsleistung für das Kraftfahrzeug vorgesehen sein.

Die Erfindung wird nachfolgend anhand von in den Zeichnungen dargestellten Ausgestaltungs- und Ausführungsbeispielen näher erläutert. In den Zeichnungen zeigt:
- Fig. 1:: eine für die Durchführung eines erfindungsgemäßen Verfahrens geeignete Brennkraftmaschine in vereinfachter Darstellung;
- Fig. 2:: zeitliche Verläufe der von der Brennkraftmaschine angeforderten Soll-Antriebsleistung, der von einem Verbrennungsmotor der Brennkraftmaschine abgegebenen Ist-Antriebsleistung sowie des Füllstands eines Sauerstoffspeichers eines Abgaskatalysators der Brennkraftmaschine; und
- Fig. 3:: den Verlauf eines Betriebsfaktors n über dem Füllstand F des Sauerstoffspeichers.

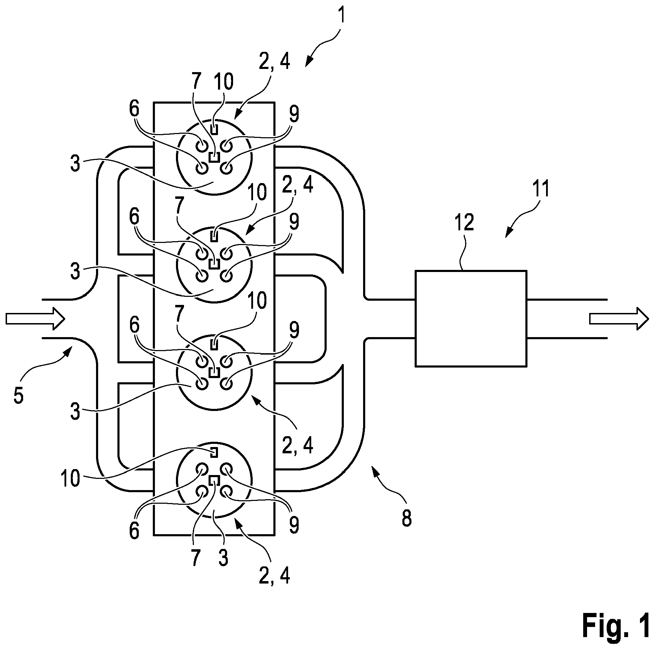

Die Fig. 1 zeigt eine für die Durchführung eines erfindungsgemäßen Verfahrens geeignete Brennkraftmaschine für ein Kraftfahrzeug. Diese umfasst einen Verbrennungsmotor 1, der beispielhaft in Form eines Hubkolbenmotors mit vier in Reihe angeordneten Zylinderöffnungen 2 ausgestaltet ist. Die Zylinderöffnungen 2 begrenzen mit darin geführten Hubkolben 3 und einem Zylinderkopf jeweils einen Brennraum 4. Diesen Brennräumen 4 wird im Betrieb des Verbrennungsmotors 1 und damit der Brennkraftmaschine Frischgas über einen Frischgasstrang 5 zugeführt, wobei die Zufuhr des Frischgases mittels Einlassventilen 6, die den einzelnen Brennräumen 4 zugeordnet sind, gesteuert wird. Bei dem Frischgas handelt es sich ausschließlich oder hauptsächlich um Luft, die aus der Umgebung angesaugt wird. Abgas, das bei der Verbrennung von Gemischmengen entstanden ist, die aus dem Frischgas sowie aus direkt über Kraftstoffinjektoren 7 in die Brennräume 4 eingespritztem Kraftstoff bestehen, wird über einen Abgasstrang 8 der Brennkraftmaschine abgeführt, wobei die Abfuhr des Abgases mittels Auslassventilen 9, die den einzelnen Brennräumen 4 zugeordnet sind, gesteuert wird. Ein Entzünden der Gemischmengen in den Brennräumen erfolgt mittels elektrischer Zündvorrichtungen 10, die beispielsweise Zündfunken erzeugen (Zündkerzen). Das Abgas durchströmt dabei eine Abgasnachbehandlungseinrichtung 11, die dafür vorgesehen ist, Bestandteile des Abgases, die als Schadstoffe angesehen werden, aus dem Abgas zu entfernen oder in unschädliche Bestandteile umzuwandeln.

Diese Abgasnachbehandlungseinrichtung 11 umfasst einen Abgaskatalysator 12 mit Sauerstoffspeicher. Der Abgaskatalysator kann in Form eines Dreiwegekatalysators ausgestaltet sein.

Im Betrieb des Verbrennungsmotors 1 werden das dem Verbrennungsmotor 1 zuzuführende Frischgas sowie die Mengen des mittels der Kraftstoffinjektoren 7 je Arbeitsspiel in die einzelnen Brennräume 4 einzubringenden Kraftstoffs in Abhängigkeit von dem konkreten Betriebszustand des Verbrennungsmotors 1, der insbesondere durch die angeforderte Last und die Betriebsdrehzahl definiert ist, gezielt eingestellt. Hierzu kann hinsichtlich des Frischgases die Betriebsstellung einer in den Frischgasstrang 5 integrierten Drosselklappe (nicht dargestellt) und/oder eines variablen Ventiltriebs (nicht dargestellt), mittels dessen die Einlassventile 6 variabel betätigbar sind, verändert werden. Der Verbrennungsmotor 1 wird dabei zumindest zeitweise im Mittel mit einem stöchiometrischen Verbrennungsluftverhältnis (λ ≈ 1) betrieben, so dass der den Brennräumen 4 zugeführte Sauerstoff über diesem Zeitraum im Wesentlichen exakt der Menge entspricht, die für eine thermische Umsetzung des gleichzeitig zugeführten Kraftstoffs gerade benötigt wird. Da ein Betrieb des Verbrennungsmotors 1 mit konstant stöchiometrischem Verbrennungsluftverhältnis regelungstechnisch nicht umsetzbar ist, wird der Verbrennungsmotor 1 derart wechselweise leicht fett und leicht mager betrieben, dass sich im Mittel über dem betrachteten Zeitraum ein Betrieb mit stöchiometrischem Verbrennungsluftverhältnis einstellt.

In dem leicht mageren Betrieb wird überschüssiger, in dem Rohabgas enthaltener Sauerstoff in dem Sauerstoffspeicher eingelagert, während in dem leicht fetten Betrieb der eingelagerte Sauerstoff für eine Umwandlung von Kohlenstoffmonoxid (CO), Stickoxiden (NOx) und unverbrannten Kohlenwasserstoffen (HC) zu Kohlenstoffdioxid (CO₂), Stickstoff (N₂) und Wasser (H₂O) mittels des Abgaskatalysators 12 genutzt wird.

Wenn der Verbrennungsmotor 1 in einem Schubbetrieb unbefeuert betrieben wird, fördert dieser Abgas in den Abgasstrang 8, das im Wesentlichen aus Luft besteht und damit erhebliche Mengen an Sauerstoff umfasst. Dieser Sauerstoff wird in dem Sauerstoffspeicher des Abgaskatalysators 12 eingelagert und führt damit zu einer Erhöhung des Füllstands des Sauerstoffspeichers. Wird der Verbrennungsmotor 1 anschließend wieder befeuert betrieben, kann dies dazu führen, dass für einen relativ kurzen aber nicht unerheblichen Zeitraum keine (ausreichende) Sauerstoffspeicherkapazität des Sauerstoffspeichers zur Verfügung steht, was zu erhöhten Stickoxidemissionen führen könnte.

Um dies zu vermeiden wird der Verbrennungsmotor 1, sofern der Füllstand des Sauerstoffspeichers einen (oberen) Grenzwert F₁ überschritten hat, mit dem Beginn des befeuerten Betriebs derart limitiert betrieben, dass sich ein relativ kleiner Massenstrom des von dem Verbrennungsmotor 1 erzeugten Rohabgases einstellt. Dadurch wird der Sauerstoffspeicher des Abgaskatalysators 12 mit einem entsprechend kleinen Mengenstrom von Stickoxiden beaufschlagt, wodurch möglichst vermieden werden kann, dass die Kapazität des Sauerstoffspeichers vollständig ausgeschöpft wird und es zu einem Schlupf von Stickoxiden durch den Abgaskatalysator 12 kommt. Relevante Mengen von Stickoxiden in dem Rohabgas des Verbrennungsmotors 1 können dabei üblicherweise auch dann nicht vermieden werden, wenn, wie dies vorzugsweise vorgesehen ist, der Verbrennungsmotor 1 mit dem Beginn des befeuerten Betriebs temporär leicht fett betrieben wird, was dazu dient, einerseits möglichst wenig Stickoxid zu erzeugen und andererseits durch ein gezieltes Bereitstellen von unverbrannten Kohlenwasserstoffen und Kohlenmonoxid ein Auslagern von Sauerstoff aus dem Sauerstoffspeicher zu bewirken.

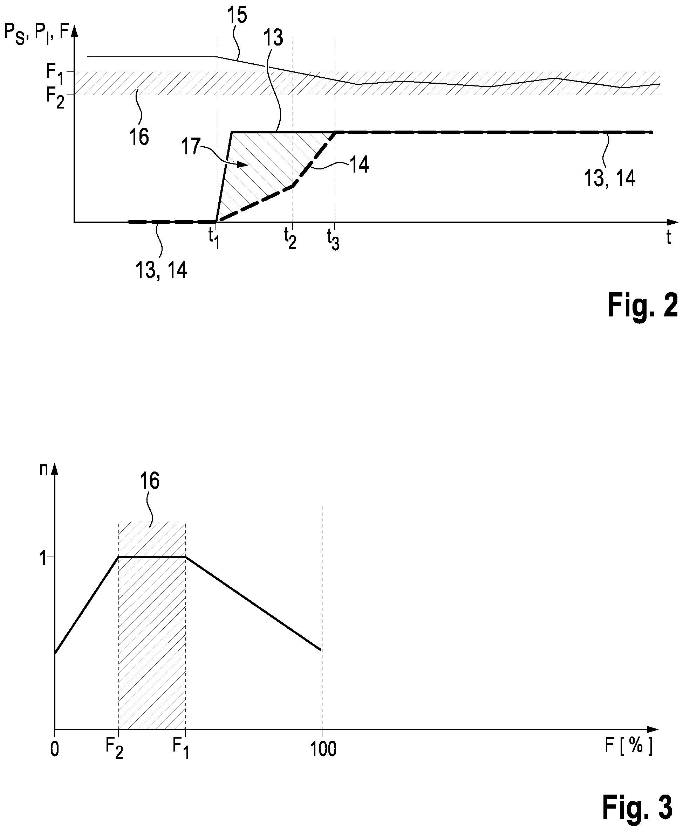

Die Fig. 2 verdeutlicht dieses Vorgehen anhand eines Diagramms, in dem zum einen der zeitliche Verlauf einer von der Brennkraftmaschine angeforderten Soll-Antriebsleistung Ps (Kurve 13), weiterhin der zeitliche Verlauf der von dem Verbrennungsmotor 1 der Brennkraftmaschine abgegebenen Ist-Antriebsleistung P_{I} (Kurve 14) sowie der zeitliche Verlauf des Füllstands F des Sauerstoffspeichers (Kurve 15) dargestellt sind. Der Verbrennungsmotor 1 wird dabei zunächst nicht betrieben (P_{S} und P_{I} jeweils Null), wodurch der Füllstand F des Sauerstoffspeichers auf einen Wert oberhalb eines oberen Grenzwerts F₁, der die obere Grenze des in der Fig. 2 dargestellten Füllstandsbereichs 16 darstellt, liegt. Innerhalb dieses Füllstandsbereichs 16 gilt die Beladung des Sauerstoffspeichers mit Sauerstoff als optimal.

Zum Zeitpunkt t₁ wird ein befeuerte Betrieb des Verbrennungsmotors (wieder) aufgenommen. Die Soll-Antriebsleistung 13 steigt dadurch kurzfristig auf einen definierten Wert. Würde der Verbrennungsmotor 1 dabei so betrieben werden, dass dessen Ist-Antriebsleistung 14 diesem Verlauf der Soll-Antriebsleistung 13 möglichst exakt folgt, könnte dies aufgrund eines entsprechend schnell größer werdenden Abgasmassenstroms dazu führen, dass der Füllstand F des Sauerstoffspeichers weiter steigt oder zumindest nur relativ langsam sinkt. Erfindungsgemäß kann daher vorgesehen sein, die Erzeugung der Ist-Antriebsleistung P_{I} des Verbrennungsmotors 1 und damit den Massenstrom des von diesem erzeugten Rohabgases gezielt für einen relativ kurzen Zeitraum (zwischen t₁ und t₂) zu limitieren, um ein möglichst schnelles Erreichen beziehungsweise Unterschreiten des Grenzwerts F₁ für den Füllstand F des Sauerstoffspeichers zu erreichen. Dies ist zum Zeitpunkt t₂ der Fall. Die Limitierung für die Betriebsfunktion des Verbrennungsmotors 1 wird daraufhin aufgehoben, wodurch sich dann die Ist-Antriebsleistung P_{I} des Verbrennungsmotors 1 relativ schnell an die Soll-Antriebsleistung Ps annähert. Eine Angleichung ist dann gemäß der Fig. 2 zum Zeitpunkt t₃ erfolgt. Ab diesem Zeitpunkt t3 kann der Verbrennungsmotor 1 wieder normal, d.h. insbesondere mit einem grundsätzlich stöchiometrischen Verbrennungsluftverhältnis betrieben werden, woraus ein wechselnder Verlauf des Füllstands F des Sauerstoffspeichers resultiert, wobei dieser dauerhaft innerhalb des optimalen Füllstandbereichs 16 liegt.

Um die Limitierung der Betriebsfunktion des Verbrennungsmotors 1, die dazu führt, dass die Ist-Antriebsleistung P_{I} des Verbrennungsmotors 1 unterhalb der Soll-Antriebsleistung Ps der Brennkraftmaschine liegt, zu kompensieren, so dass von der Brennkraftmaschine insgesamt eine der Soll Antriebsleistung Ps entsprechende Ist-Antriebsleistung bereitgestellt wird, kann dann, wenn mit dem Verbrennungsmotor 1 ein Elektromotor antriebsverbunden ist, die Differenz zwischen der Soll-Antriebsleistung Ps der Brennkraftmaschine und der Ist-Antriebsleistung P_{I} des Verbrennungsmotors 1 durch eine entsprechenden Betrieb des Elektromotors kompensiert werden. Diese Differenz entspricht dem in der Fig. 2 schraffiert dargestellten Kompensationsbereich 17, der in dem Zeitraum zwischen t₁ und t₃ zwischen den Verläufen 13, 14 der Soll-Antriebsleistung Ps und der Ist-Antriebsleistung P_{I} gelegen ist.

Die Fig. 3 zeigt in einem Diagramm den Verlauf eines Betriebsfaktors n (Vertikalachse) über dem Füllstand F eines Sauerstoffspeichers eines Abgaskatalysators, wobei dieser Betriebsfaktor n dem Kehrwert eine Limitierungsfaktors entspricht. In der Fig. 3 ist zudem derjenige Füllstandbereich 16 eingezeichnet, innerhalb dessen die Beladung des Sauerstoffspeichers mit Sauerstoff als optimal gilt. Liegt der Füllstand F des Sauerstoffspeichers innerhalb dieses Füllstandsbereichs 16, wird ein Betriebsfaktor n von eins umgesetzt, was gleichbedeutend damit ist, dass keine Limitierung der Betriebsfunktion des Verbrennungsmotors 1 erfolgt. Überschreitet der Füllstand F des Sauerstoffspeichers jedoch einen oberen Grenzwert F_{1,} verringert sich der Betriebsfaktor n auf einen Wert kleiner eins, was gleichbedeutend mit einer Limitierung der Betriebsfunktion des Verbrennungsmotors 1 ist. Der Betriebsfaktor n verringert sich dabei ausgehend von dem oberen Grenzwert F₁ bis hin zu einem Füllstand von 100%, bei dem der Sauerstoffspeicher im Wesentlichen keine Sauerstoffspeicherkapazität mehr aufweist. Der dann kleinste Betriebsfaktor n kann beispielsweise einem Wert zwischen 0,4 und 0,5 entsprechen.

Ergänzend dazu zeigt die Fig. 3 auch, dass es möglich ist, die Betriebsfunktion des Verbrennungsmotors 1 zu limitieren, wenn der Füllstand des Sauerstoffspeichers unterhalb eines unteren Grenzwerts F₂ liegt. Auch diese Limitierung kann darin bestehen, einen nur relativ kleinen Massenstrom des von dem Verbrennungsmotor 1 erzeugten Rohabgases zuzulassen. Dadurch kann vermeiden werden, dass das Abgas, das von dem mit dem Beginn des befeuerten Betriebs zunächst fett betriebenen Verbrennungsmotors 1 erzeugt wird, so große Mengen an unverbrannten Kohlenwasserstoffen und Kohlenmonoxid umfasst, dass deren Oxidation durch den Abgaskatalysator 12 unter Verwendung von in dem Sauerstoffspeicher eingelagertem Sauerstoff nicht in einem ausreichenden Maß erfolgen kann und es dadurch zu sogenannten Fettdurchbrüchen durch den Abgaskatalysator 12 kommen kann. Auch für die Limitierung bei einem Füllstand F des Sauerstoffspeichers unterhalb des unteren Grenzwerts F₂ kann vorgesehen sein, dass sich der Betriebsfaktor n ausgehend von dem unteren Grenzwert F₂ bis hin zu einem Füllstand von 0%, bei dem der Sauerstoffspeicher im Wesentlichen keinen Sauerstoff mehr eingelagert hat, verringert. Der dann wiederum kleinste Betriebsfaktor n kann auch in diesem Fall einem Wert zwischen 0,4 und 0,5 entsprechend. Insbesondere dann, wenn die Möglichkeit besteht, die Limitierung der Betriebsfunktion des Verbrennungsmotors durch einen mit dem Verbrennungsmotor antriebsverbundenen Elektromotor zu kompensieren sind auch noch kleinere Werte des Betriebsfaktors n möglich.

### BEZUGSZEICHENLISTE

- 1: Verbrennungsmotor
- 2: Zylinderöffnung
- 3: Hubkolben
- 4: Brennraum
- 5: Frischgasstrang
- 6: Einlassventil
- 7: Kraftstoffinjektor
- 8: Abgasstrang
- 9: Auslassventil
- 10: Zündvorrichtung
- 11: Abgasnachbehandlungseinrichtung
- 12: Dreiwegekatalysator
- 13: Verlauf der Soll-Antriebsleistung der Brennkraftmaschine
- 14: Verlauf der Ist-Antriebsleistung des Verbrennungsmotors
- 15: Verlauf des Füllstands des Sauerstoffspeichers
- 16: Füllstandsbereich mit optimaler Sauerstoffbeladung
- 17: Kompensationsbereich

- Ps: Soll-Antriebsleistung der Brennkraftmaschine
- P_{I}: Ist-Antriebsleistung des Verbrennungsmotors
- F: Füllstands des Sauerstoffspeichers
- F₁: oberen Grenzwert des Füllstands des Sauerstoffspeichers
- F₂: unterer Grenzwert des Füllstands des Sauerstoffspeichers
- n: Betriebsfaktor

## Patentansprüche

1. Verfahren zum Betreiben einer Brennkraftmaschine, die einen Verbrennungsmotor (1) und einen Abgasstrang (8) mit einer Abgasnachbehandlungseinrichtung (11) aufweist, wobei die Abgasnachbehandlungseinrichtung (11) einen Abgaskatalysator (12) mit einem Sauerstoffspeicher umfasst, **dadurch gekennzeichnet, dass** mit dem Beginn eines befeuerten Betriebs des Verbrennungsmotors (1), der sich an einen nicht befeuerten Schubbetrieb oder an einen Nichtbetrieb des Verbrennungsmotors (1) anschließt, temporär die Größe eines von dem Verbrennungsmotor (1) erzeugten Abgasmassenstroms in Abhängigkeit von dem Füllstand (F) des Sauerstoffspeichers gesteuert wird.

2. Verfahren gemäß Anspruch 1, **dadurch gekennzeichnet, dass** bei einem oberhalb eines Grenzwerts (F₁) liegenden Füllstand (F) des Sauerstoffspeichers die Betriebsfunktion des Verbrennungsmotors (1) derart limitiert wird, dass sich ein relativ kleiner Abgasmassenstrom einstellt.

3. Verfahren gemäß Anspruch 2, **dadurch gekennzeichnet, dass** der Grenzwert (F₁) variabel in Abhängigkeit von Betriebsparametern der Brennkraftmaschine gewählt wird.

4. Verfahren gemäß Anspruch 2 oder 3, **dadurch gekennzeichnet, dass** die Limitierung der Betriebsfunktion des Verbrennungsmotors (1) umso größer gewählt wird, je höher der Füllstand (F) des Sauerstoffspeichers ist.

5. Verfahren gemäß einem der Ansprüche 2 bis 4, **dadurch gekennzeichnet, dass** die Limitierung der Betriebsfunktion des Verbrennungsmotors (1) durch einen mit dem Verbrennungsmotor (1) antriebsverbundenen Elektromotor zumindest teilweise kompensiert wird.

6. Verfahren gemäß einem der vorhergehenden Ansprüche, **dadurch gekennzeichnet, dass** der Nichtbetrieb und der sich anschließende befeuerte Betrieb aus einer automatisierten Start-Stopp-Funktion des Verbrennungsmotors (1) resultieren.

7. Verfahren gemäß einem der Ansprüche 1 bis 5, **dadurch gekennzeichnet, dass** während des Schubbetriebs ein Wechsel der Übersetzungsstufe eines mit dem Verbrennungsmotor (1) antriebsverbundenen Schaltgetriebes erfolgt ist.

8. Verfahren gemäß Anspruch 7, **dadurch gekennzeichnet, dass** der Wechsel zu einer kleinere Übersetzungsstufe erfolgt ist.

9. Verfahren gemäß einem der vorhergehenden Ansprüche, **dadurch gekennzeichnet, dass** der Verbrennungsmotor (1) mit dem Beginn des befeuerten Betriebs temporär fett und anschließend mit einem stöchiometrischen Verbrennungsluftverhältnis betrieben wird.
